# EUROPEAN PATENT SPECIFICATION

(11) **EP 1 332 868 B1**
(45) Date of publication and mention of the grant of the patent: **20.04.2005**
(21) Application number: 02002541.7
(22) Date of filing: 04.02.2002
(51) Int. Cl.: B32B 27/32

(54) **Multilayer film**
Mehrschichtfolie
Film multicouche

(43) Date of publication of application: 06.08.2003
(73) Proprietor: Borealis GmbH, 2323 Schwechat-Mannswörth (AT); RKW AG Rheinische Kunststoffwerke, 67547 Worms (DE)
(72) Inventor: Grünberger, Manfred, 4050 Traun (AT); Wolfsberger, Anton, 4210 Gallneukirchen (AT); Deml, Robert, 85614 Kirchseeon (DE); Forster, Jürgen, 83549 Eiselfing (DE); Neumeier, Otto, 83512 Wasserburg (DE)
(74) Representative: VA TECH Patente GmbH & Co

(56) References cited:
- US-A- 5 093 188
- US-A- 5 516 475
- US-A1- 2001 014 401
- US-A1- 2001 046 606

## Description

### Introduction

The invention relates to a multilayer film and, more particularly, to a thermoshrinkable film applicable for the packaging of goods and for the production of non sticking hoods useful for overwrapping goods packed in polyethylene bags. More particularly, the invention relates to a multilayer film comprising a layer A which is comprised of polyethylene, a layer C comprising a composition (ii) of one or more propylene copolymers and an intermediate layer B.

### Background of the Invention

One distinguishing feature of a shrink film is the film's ability, upon exposure to a certain temperature, to shrink, or, if restrained from shrinking, to generate shrink tension within the film. The manufacture of shrink films, as is well known in the art, may be generally accomplished by extrusion of resinous materials which have been heated to their flow or melting point from an extrusion die in tubular or planar form. After cooling the extrudate by quenching, it is reheated to its orientation temperature range. The orientation temperature range for a given film will vary with the different resinous polymers and blends thereof which comprise the film. In general, the orientation temperature may be stated to be above room temperature and below the melting point of the film.

The terms "oriented" and "orientation" are used herein to describe the process and resultant product characteristics obtained by stretching and immediately cooling a resinous polymeric material which has been heated to its orientation temperature range so as to revise the molecular configuration of the material by physical alignment of the molecules to improve mechanical properties of the film such as, for example, shrink tension and orientation release stress. When the stretching force is applied in one direction, uniaxial orientation results. When the stretching force is applied in two directions, biaxial orientation results.

The process of stretching a film at its orientation temperature range may be accomplished in a number of ways such as, e.g., by a blow film process. This and other techniques are well known in the art and involve stretching the film in the cross or transverse direction (TD) and/or in the longitudinal or machine direction (MD). After being stretched, the film is rapidly cooled to quench and thus set or lock-in the oriented molecular configuration. Such an oriented and quenched film is said to be "heat-shrinkable," i.e., the film will tend to return toward its original, unoriented (unstretched) dimensions when subsequently heated to an appropriate temperature below its melting temperature range.

After locking-in the oriented molecular configuration by quenching, the film may be stored in rolls and utilised to tightly package a variety of items. In this regard, the product to be packaged is first enclosed in the heat-shrinkable material by heat sealing the shrink film to itself where necessary to form an enclosure. Thereafter, the enclosed product is subjected to elevated temperatures by, for example, passing the enclosed product through a hot air or hot water tunnel. This causes the film to shrink around the product to produce a tight wrapping that closely conforms to the contour of the product.

A special case is securing pallets with shrink hoods where the palletised goods are already packed with polyethylene based shrink films. When the shrink hood is subjected to elevated temperature, a partial sticking of the hood to the packing of the goods cannot be avoided if the shrink hood is also based on polyethylene. The interior film, i.e. the polyethylene based shrink film, would be damaged or destroyed when the exterior film, the shrink hood, is removed. In order to avoid this problem it is necessary to use "non sticking hoods", where the inside is comprised of a polyolefin which does not stick to polyethylene. Before non sticking hoods were developed it was necessary to use an intermediate hood from e.g. polypropylene. This meant a considerable additional effort and is expensive.

The first generation of non sticking hoods, produced by coextrusion, comprised an outer polyethylene layer, an inner polypropylene-based layer and an intermediate adhesive layer, based on ethylene vinylacetate copolymer (EVA). This first generation of non sticking hoods had some serious disadvantages:
- Strong curling effect, which causes problems with automatic shrink hood equipment
- inhomogeneous shrinking behaviour of the different layers
- because of the coextrusion technique and the polypropylene used a higher shrinking temperature was required which also meant an increase in energy consumption and/or a decrease in throughput.
- bad sealability;
- inadequate seal strength due to inadequate adhesion of the different layers. This often resulted in an opening of the hood and destruction of the protective cover of the pallet.

A first improvement was brought about by using polymers based on ionomers instead of polypropylene for the interior layer. The polyethylene based exterior layer and the EVA based adhesive layer usually remained unchanged.

Compared to the first generation the non sticking hoods of this second generation have the following advantages:
- reduced curling effect
- improved shrinking behaviour
- improved seal strength
- improved adhesion of layers

However, the following disadvantages were also observed:
- inadequate relaxation behaviour. This means that the shrinked hoods lost shrinking force when subjected to increased temperatures, e.g. during transport in the summer.
- High cost of ionomers.

The next development with non sticking hoods was a polypropylene composition, especially an "ethylene-rich" (5-15 mol% ethylene) copolymer for the interior layer. The polyethylene based exterior layer and the EVA based adhesive layer usually remained unchanged.

Compared to the second generation the non sticking hoods of this third generation have the advantages of an improved (i.e. reduced) relaxation behaviour and of being less costly. In addition, non sticking hoods of the third generation have an acceptable curling effect and an acceptable shrinking behaviour.

They have however the disadvantage of low seal strength and low adhesion of the layers. The non sticking hoods of this third generation are therefore also not fully able to safely secure already packed and palletised goods.

### Object of the invention

It is therefore evident that there still exists a need for multilayer films which can be utilised for the production of improved non sticking hoods.

It is therefore the object of the present invention to provide novel multilayer films which can be utilised which can be utilised as thermoshrinkable films and for the production of non sticking hoods which have the advantages of non sticking hoods of the prior art while avoiding their disadvantages.

In particular, the non sticking hoods produced from the novel multilayer films shall show good relaxation behaviour and they shall have excellent mechanical properties in order to allow down gauging of the films and a reduction in costs.

In US 5,093,188 a three layer stretch wrap film having an AIB/C structure is disclosed, where layer A has a high cling force to layer B, layer B is a core layer having high tensile strength and layer C has negligible cling properties. The films of US 5,093,188 do not have thermoshrink properties. Also, the cling properties of layer A are disadvantageous for the present invention.

The foremost object which is to be achieved by the invention are films with an improved seal strength and adhesion of layers.

This object of the invention has been achieved by an intermediate layer B which either comprises a composition (i) of
10 - 90 wt% of a linear low density polyethylene with a density of less than 920 kg/m³ and 90 - 10 wt% of a propylene copolymer comprising from 0.3 - 18 wt% of ethylene and/or at least one C₄-C₁₂ α-olefin and 82.0 - 97.7 wt% of propylene
and/or a composition (iii) of
60 - 90 wt% of a linear low density polyethylene with a density of less than 920 kg/m³ and 10 - 40 wt% of an ethylene vinylacetate copolymer comprising from 5.0 - 35.0 wt% of vinyl acetate and from 65.0 - 95.0 wt% of ethylene.

The propylene copolymer of composition (i) or the ethylene vinylacetate copolymer of composition (iii) together with the respective amount of linear low density polyethylene comprise an intermediate adhesive layer which effects a superior adhesion between the layer A forming polyethylene and the layer C forming composition (ii). In order to accomplish this, the polyethylene of composition (i) or (iii) must show a certain "stickiness" which is best expressed as a maximum density of 920 kg/m³. "Stickiness" could also be described with the parameters melting temperature and comonomer content, but density is most appropriate to define the desired property.

A preferred linear low density polyethylene of composition (i) or (iii) is a metallocene catalysed polyethylene, preferably with a density of smaller than 900 kg/m³, more preferably with a density of smaller than 880 kg/m³, most preferably smaller than 870 kg/m³.

The metallocene catalysed linear low density polyethylene can be chosen from the typical commercial products, e.g. AFFINITY™ EG8150 or EG8100, both of Dow Chemical or Exact 0203 from Exxon Mobile.

According to a preferred embodiment the intermediate layer B comprises a composition (i) of 20 - 80 wt%, more preferably 40 - 80 wt%, most preferably of 65 - 75 wt% of the linear low density polyethylene and of 20 - 80 wt%, preferably 20 - 60 wt%, most preferably 25 - 35 wt% of the propylene copolymer.

A wide range of propylene copolymers are applicable for the intermediate layer B.

According to one embodiment of the present invention the propylene copolymer of composition (i) comprises 0.3 - 3.0 wt%, preferably 0.8 - 2.0 wt% of ethylene, 2.0 - 15 wt%, preferably 4.0 - 12.0 wt% of the at least one C₄-C₁₂ α-olefin and 82.0 - 97.7 wt%, preferably 85.0 - 95.2 wt% of propylene.

The at least one C₄-C₁₂ α-olefin can be any one or mixtures of 1-butene, 1-pentene, 4-methyl-1-pentene, 1-hexene, 1-heptene or 1-octene, where 1-butene is preferred.

According to a further embodiment of the present invention the propylene copolymer of composition (i) comprises 2.0 - 8.0 wt%, preferably 4.0 -6.0 wt% of ethylene and 92.0 - 98.0 wt%, preferably 94.0 - 96 wt% of propylene.

According to a still further embodiment of the present invention the propylene copolymer of composition (i) comprises 2.0 - 15.0 wt%, preferably 4.0 - 10.0 wt% of 1-butene and 85.0 - 98.0 wt%, preferably 90.0 - 96 wt% of propylene.

According to a preferred embodiment the composition (iii) of which the intermediate layer B may be comprised alternatively or in addition to composition (i), comprises 60 - 85 wt%, preferably 60 - 80 wt% of the linear low density polyethylene and 15 - 40 wt%, preferably 20 - 40 wt% of the ethylene vinyl acetate copolymer.

For the ethylene vinyl acetate copolymer of composition (iii) it is preferred that it comprises from 15 - 35 wt%, preferably 18 - 33 wt% of vinyl acetate and from 65 - 85 wt%, preferably 67 - 82 wt% of ethylene.

The polyethylene of layer A preferably is a low density polyethylene. For the polyethylene of layer A it is preferred to have a density of from 910 to 940 kg/m³, a melting point from 106 to 125 °C and an MFR (190 °C/2.16 kg) of from 0.1 to 1.0 g/10 min.

For the films of the present invention to be applicable as thermoshrinkable films it is important that layers A and C have a similar shrinking behaviour. It is therefore preferred that the difference between the melting temperature of the layer A forming polyethylene and the layer C forming composition (ii) is smaller than 40 °C, preferably smaller than 35 °C and still more preferably smaller than 30 °C.

Layer C comprises a composition (ii) of one or more propylene copolymers selected from the list consisting of
propylene/ethylene copolymers with 2.0 - 8.0 wt%, preferably 4.0 - 6.0 wt% of ethylene and 92.0 - 98.0 wt%, preferably 94.0 - 96 wt% of propylene,
propylene/1-butene copolymers with 2.0 - 15.0 wt%, preferably 4.0 - 10.0 wt% of 1-butene and 85.0 - 98.0 wt%, preferably 90.0 - 96 wt% and
propylene/ethylene/α-olefin copolymers with 0.3 - 3.0 wt%, preferably 0.8 - 2.0 wt% of ethylene, 2.0 - 15 wt%, preferably 4.0 - 12.0 wt% of at least one C₄-C₁₂ α-olefin and 82.0 - 97.7 wt%, preferably 85.0 - 95.2 wt% of propylene.

Layer C comprises a composition (ii) with an MFR (230 °C/2.16 kg) of from 0.5-10 g/10 min and a melting temperature of from 128 - 145 °C.

The films according to the invention are advantageously used as thermoshrinkable films in packaging applications.

The films according to the invention are especially useful for the production of non sticking hoods.

### Description of Production of a Propylene Terpolymer

The polymerisation process for the production of the propylene terpolymers according to the invention may be a continuous process or a batch process utilising known methods and operating in liquid phase, optionally in the presence of an inert diluent, or in gas phase or by mixed liquid-gas techniques. The process is preferably carried out in the presence of a stereospecific catalyst system.

As catalyst any ordinary stereospecific Ziegler-Natta catalyst can be used. An essential component in those catalysts are solid catalyst components comprising a titanium compound having at least one titanium-halogen bond, an internal electron donor compound and a magnesium halide in active form as a carrier for both the titanium component and the donor compound. The catalysts can contain - as internal electron donor - compounds selected from ethers, ketones, lactones, compounds containing N, P and/or S atoms and esters of mono and dicarboxylic acids.

A further essential component of the catalyst is an organoaluminium compound, such as an alkylaluminium compound. Additionally, an external electron donor is generally used.

To obtain the propylene terpolymer, it is preferred to use a polymerisation process based on at least one reactor and an optional second polymerisation step comprising at least one gas phase reactor.

Before the catalyst system is used in the actual polymerisation process it is optionally prepolymerised with small amounts of α-olefins in order to enhance catalyst performance and to improve the morphology of the end product.

In the first step of the process the optionally prepolymerised catalyst system and a monomer mixture comprised of propylene, ethylene and at least one C₄-C₁₂ α-olefin is fed into a reactor. The at least one C₄-C₁₂ α-olefin preferably is any one or mixtures of 1-butene, 1-pentene, 4-methyl-1-pentene, 1-hexene, 1-heptene or 1-octene. Particularly preferred is 1-butene. The amount of propylene can be 57 to 89.7 wt%, the amount of ethylene can be 0.3 to 3.0 wt% and the amount of C₄-C₁₂ α-olefin can be 10 to 40 wt%.

Polymerisation can be carried out in the presence of the previously mentioned organoaluminium compound and an external donor compound at temperatures lower than 90 °C and pressures in the range of 10 to 90 bar, preferably 30 to 70 bar. The polymerisation is carried out in such conditions that 50 to 100 wt%, preferably 75 to 99 wt% of the end product is polymerised in the first reactor.

Any metallocene catalyst capable of catalysing the formation of a propylene terpolymer may also be used. A suitable metallocene catalyst comprises a metallocene/activator reaction product impregnated in a porous support at maximum internal pore volume. The catalyst complex comprises a ligand which is typically bridged, and a transition metal of group IVa ... Via , and an organoaluminium compound. The catalytic metal compound is typically a metal halide.

In the first polymerisation step a terpolymer is produced, in which the content of ethylene monomer is in the range of 0.2 to 3.0 wt%, preferably 0.3 to 1.5 wt% and the content of C₄-C₁₂ α-olefin is in the range of 2 to 15 wt%, preferably of 3 to 12 wt%. Hydrogen is added, when desired, into the first reactor for adjusting the molecular weight of polymer, as conventional.

After the polymerisation in the first reactor, the reaction medium is optionally transferred into a second reactor, which can be a gas phase reactor.

In the optional second reactor, 0 to 50 wt%, preferably 1 to 25 wt% of the final terpolymer is formed. In the second reactor the polymerisation can be carried out at a temperature of 60 to 90 °C and at a pressure higher than 5 bar, preferably higher than 10 bar. Optionally, propylene and other monomers can be added into the second reactor. Hydrogen can also be added into the gas phase reactor, if desired.

The precise control of the polymerisation conditions and reaction parameters is within the skill of the art. After the polymerisation in the first and the optional second reactor is finished, the polymer product is recovered by conventional procedures.

The resulting polymer particles may be pelletised in a conventional compounding extruder with various additives, which are generally used in thermoplastic polymer compositions.

### Description of Production of a Propylene Copolymer

The propylene copolymers of composition (ii) or (i) - if the comonomer mixture is binary - are produced in much the same way as a propylene terpolymer of composition (i), except that the comonomer mixture is binary. For producing a copolymer of composition (i) and (ii) the preferred comonomer mixtures are propylene/ethylene and propylene/1-butene. In the following paragraphs the production of a propylene copolymer is described by way of example for a propylene-ethylene copolymer.

To obtain the propylene-ethylene copolymer, it is again preferred to use a polymerisation process based on at least one reactor and an optional second polymerisation step comprising at least one gas phase reactor.

In the first step of the process the optionally prepolymerised catalyst system and a monomer mixture comprised of propylene and ethylene is fed into a reactor. The amount of propylene is from 92.0 to 98.0 mol% the amount of ethylene is from 2.0 to 8.0 wt%. The polymerisation is carried out in such conditions that 50 to 100 wt%, preferably 75 to 99 wt% of the end product is polymerised in the first reactor. In the first polymerisation step a copolymer is produced, in which the content of ethylene comonomer is in the range of from 1.5 to 8 wt%, preferably from 3 to 7 mol%.

Hydrogen is added, when desired, into the first reactor for adjusting the molecular weight of polymer, as conventional.

After the polymerisation in the first reactor, the reaction medium is optionally transferred into a second reactor, which can be a gas phase reactor.

In the optional second reactor, 0 to 50 wt%, preferably 1 to 25 wt% of the final copolymer is formed. In the second reactor the polymerisation can be carried out at a temperature of 60 to 90 °C and at a pressure higher than 5 bar, preferably higher than 10 bar. Optionally, propylene and other monomers can be added into the second reactor. Hydrogen can also be added into the gas phase reactor, if desired.

The precise control of the polymerisation conditions and reaction parameters is within the skill of the art. After the polymerisation in the first and the optional second reactor is finished, the polymer product is recovered by conventional procedures.

The resulting polymer particles may be pelletised in a conventional compounding extruder with various additives, which are generally used in thermoplastic polymer compositions, such as stabilisers, antioxidants, acid neutralising agents, ultraviolet absorbers, clarifying agents, antiblocking agents, antistatic agents, antifogging agents, etc.

The polymer composition (i) is preferably produced by mixing the metallocene catalysed ethylene polymer with the propylene copolymer of composition (i) optionally adding conventional stabilisers.

As the polymer composition (ii) a single propylene copolymer as described above may be used. Alternatively, the polymer composition (ii) is produced by mixing two or more propylene polymers as described above and optionally adding conventional additives and/or stabilisers and/or fillers.

Preferably, mixing is done by melt blending in an extruder or another melt blending unit, preferably in a single screw extruder with a screw length >20D.

The thermoshrinkable films of the invention can be conveniently produced by coextrusion of an ethylene polymer and the compositions (i) and (ii) through an extruder system with at least as many extruders as the film has distinguishable layers, i.e. at least three. It is preferred to use the blown film method which is known in the art.

### Test methods

**The melt flow rates** were measured with a load of 2.16 kg and at 230 °C (190 °C for ethylene polymers). The melt flow rate (MFR) is that quantity of polymer in grams which the test apparatus standardised to ISO 1133 extrudes within 10 minutes at a temperature of 230 °C (190 °C, respectively) under a weight of 2.16 kg.

**Comonomer contents** (ethylene and butene) were measured with Fourier transform infrared spectroscopy (FTIR) calibrated with ¹³C-NMR.

**Density** was determined according to ISO 1183.

**Melting temperature** was determined by DSC according to EN ISO 11357-01

**Tensile test** was performed according to ISO 527-3 and the data which were measured are shown in table 3. **Tensile modulus (E-modulus)** was also determined according to ISO 527-3.

**Tear resistance** and **elongation at break** were determined using the same experimental setup and sample geometry as in ISO 527-3.

**Seal strength:** ASTM F 88

Table 1 lists the polymers which were used for producing the films of the examples.

**Table 1**

| | | polymer | | | | | | |
|---|---|---|---|---|---|---|---|---|
| | | FT3200 | ELVAX 3170 ("EVA") | Surlyn^{(R)} AS01 ("Ionomer") | Borseal™ TD120BF | AFFINITY™ EG8150 | RE239CF | RD208CF |
| properties | unit | | | | | | | |
| C₂ | | X | X | X | X | X | X | X |
| C₃ | | - | - | - | X | - | X | X |
| C₄ | | - | - | - | X | - | - | - |
| C₈ | | - | - | - | - | X | - | - |
| vinyl acetate | | - | X | - | - | - | - | - |
| methacrylic acid | | - | - | X | - | - | - | - |
| Na/Zn | | - | - | X | - | - | - | - |
| | | | | | | | | |
| MFR (230°C/2.16 kg) | g/10 min | | | | 6.5 | | 11.0 | 8.0 |
| MFR (190°C/2.16 kg) | g/10 min | 0.25 | 2.5 | | | 0.5 | | |
| | | | | | | | | |
| Melting temperature | °C | 110 | 87 | | 132 | 56 | 138 | 140 |
| density | kg/m³ | 920 | 940 | | 905 | 868 | 905 | 905 |

ELVAX 3170 and Surlyn® AS01 are commercially available from DuPont Company.

AFFINITY™ EG8150 is commercially available from The Dow Chemical Company.

FT3200, Borseal™ TD120BF, RE239CF and RD208CF are commercially available from Borealis A/S.

Borstal™ TD120BF is a propylene terpolymer with 92 wt% propylene and 8 wt% (ethylene + 1-butene).

RE239CF and RD208CF are propylene/ethylene copolymers with 95 wt% propylene and 5 wt% ethylene.

A number of examples was prepared and characterised by a set of physical and mechanical properties. Table 2 shows the compositions of the examples.

**Table 2**

| | | example | | | | | |
|---|---|---|---|---|---|---|---|
| | | 1 (comparative) | 2 (invention) | 3 (invention) | 4 (invention) | 5 (comparative) | 6 (comparative) |
| layer | unit | | | | | | |
| **A** | | FT3200 | FT3200 | FT3200 | FT3200 | FT3200 | FT3200 |
| thickness | µm | 90 | 70 | 70 | 70 | 70 | 90 |
| | | | | | | | |
| **B** | | Elvax 3170 | 70 wt% EG8150 30 wt% TD120BF | 70 wt% EG8150 30 wt% TD120BF | 70 wt% EG8150 30 wt% RD208CF | Elvax 3170 | Elvax 3170 |
| thickness | µm | 10 | 10 | 10 | 10 | 10 | 10 |
| | | | | | | | |
| **C** | | Surlyn AS01 | 49 wt% RE239CF 49wt% RD208CF | 49 wt% RE239CF 49wt% RD208CF | 49 wt% RE239CF 49wt% RD208CF | 49 wt% RE239CF 49wt% RD208CF | 49 wt% RE239CF 49wt% RD208CF |
| thickness | µm | 10 | 10 | 10 | 10 | 10 | 10 |
| | | | | | | | |
| overall thickness | µm | 110 | 90 | 90 | 90 | 90 | 110 |

Sets of data of two inventive examples with apparently identical composition and film thicknesses are included in order to show the variation in the measured data.

The values for thickness are nominal values and are set at production of the films. Actual values for thickness may differ from the nominal values. Depending on the nominal layer thickness the difference may about ± 2 µm (nominal thickness 10 µm) or about ± 7 µm at a nominal thickness of 90-110 µm.

The example films were coextruded on a conventional Baumeister blown film plant. Details of the extrusion and blowing operating conditions are given in Table 3.

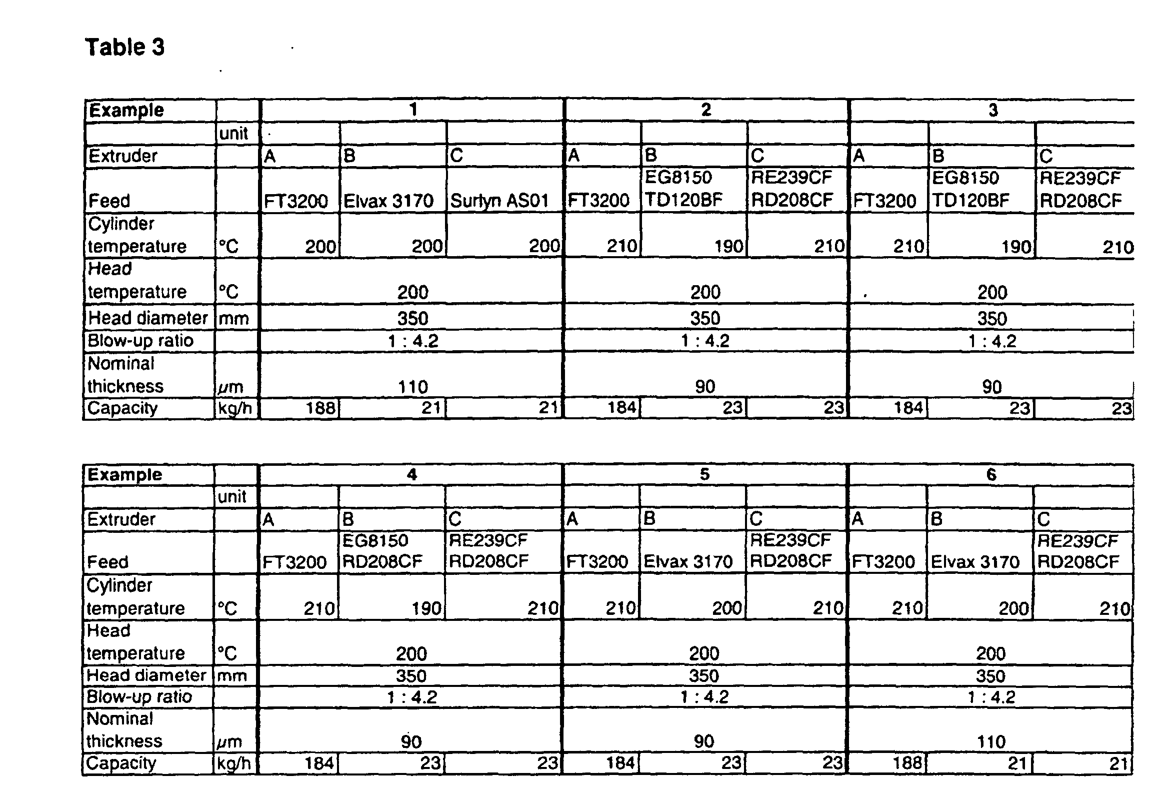

Characterisation of the coextruded films is reported in table 4.

Tensile properties according to DIN 53455 and DIN 53457 were determined with specimens measuring 2 cm in width and 10 cm in length.

Sealed test specimens for seal strength measurement were prepared by: a) superimposing two stripes of film, 17 cm long in the extrusion direction and 20 cm wide; b) making a sealing along one of the short sides of the stripes using a Brugger HSG heating bar sealing device, operating at 130 °C, with a pressure of 1.5 kp/cm², for a heating time of 1.5 seconds; and c) cutting two specimens 17 cm long in the extrusion direction and 1.5 cm wide from each couple of sealed stripes. The force necessary to tear apart the two stripes of the sealed specimens is determined with the same setup and experimental procedure as for the tensile test according to ISO 527-3. That force is recorded and shown in table 4 as "seal strength".

Tensile strength was determined a second time, but with specimens measuring 1.5 cm in width and 10 cm in length and the ratio between tensile strength (N/15mm) and seal strength was calculated. This ratio is also shown in table 4. This ratio is important for the practitioner to indicate the relative strengths of the film to that of the sealing.

It should be noted, that the term "seal strength" might be misleading, since in most cases it is not the seal which breaks. In most cases the different layers are torn apart when the two stripes are subjected to force and torn apart, while the sealing itself mostly holds. Thus, the "seal strength" rather is an indication of how good the adhesion between the layers A, B and C is.

This behaviour was observed with all of the comparative examples. While for example 1 the seal strength (N/15mm) is almost as high as the tensile strength (N/15mm), but altogether on a rather low level, examples 4 and 5 did show higher tensile strengths but even smaller values for seal strength.

As for the examples according to the invention, the value "no break" means, that neither the seal nor the layers A, B or C were torn apart, but rather one of the stripes itself was torn apart. This means that for the first time it is possible to produce films where the seal strength and thus the adhesive force of the layers not only exceeds the tensile strength of the film itself, the increase in seal strength is also not bought with a decrease in any of the other mechanical parameters of the films.

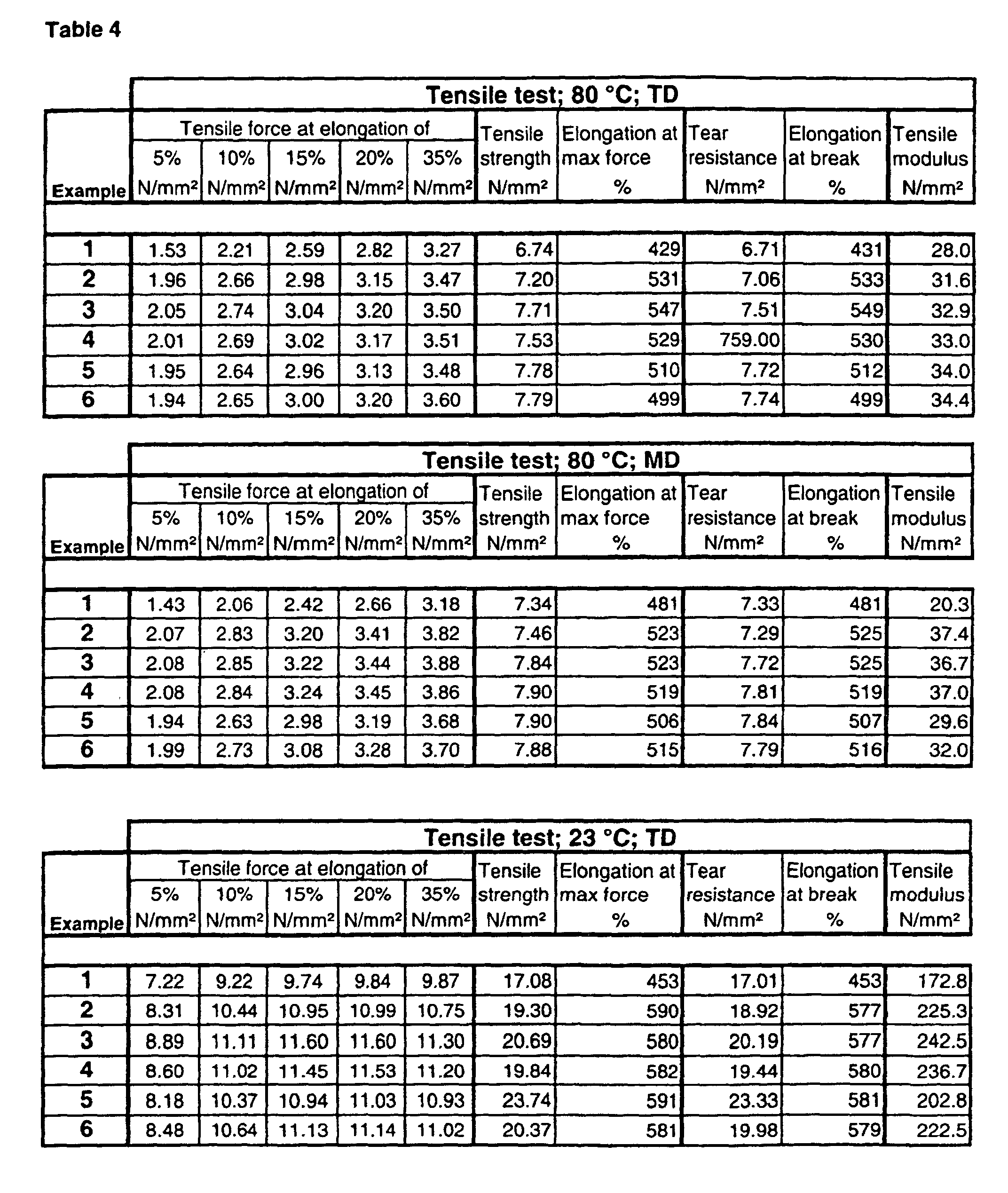

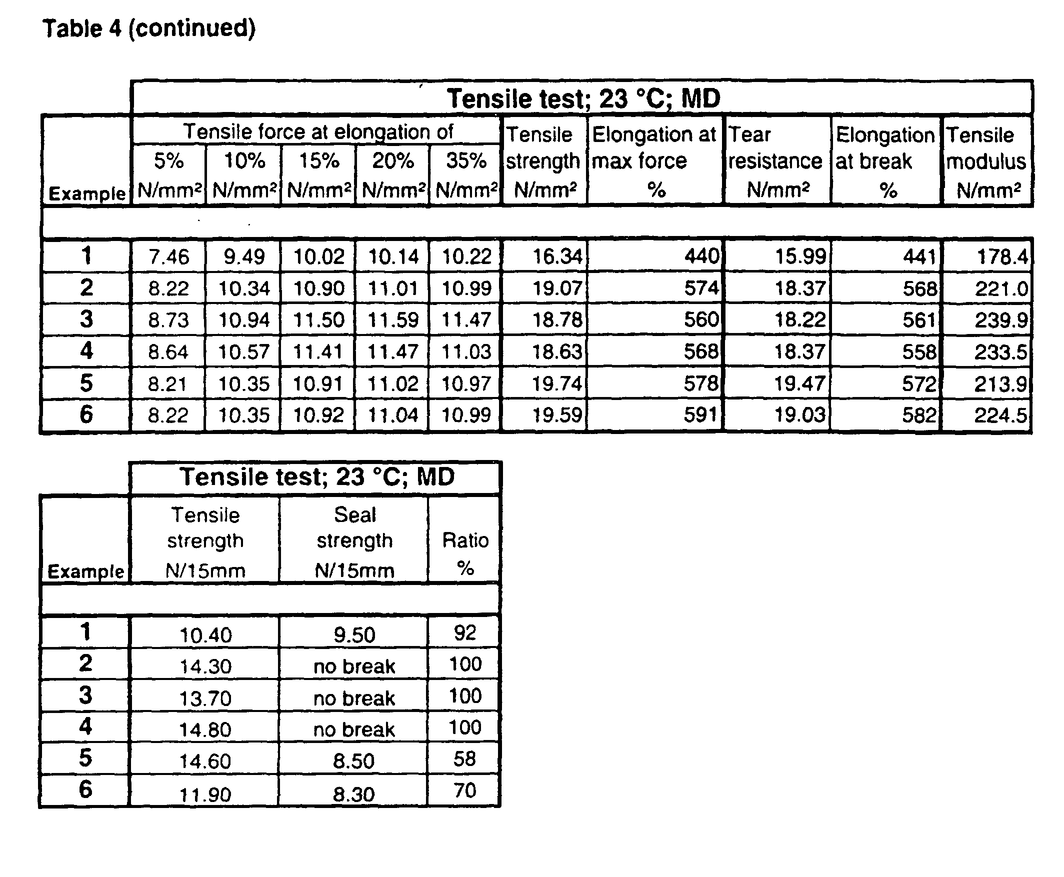

## Claims

1. A multilayer film comprising
a) a layer A which is comprised of polyethylene,
b) a layer C comprising a composition (ii) of one or more propylene copolymers
c) an intermediate layer B,
**characterised in that** the intermediate layer B comprises a composition (i) of
10 - 90 wt% of a linear low density polyethylene with a density of less than 920 kg/m³ and
90 - 10 wt% of a propylene copolymer comprising from 0.3 - 18 wt% of ethylene and/or at least one C₄-C₁₂ α-olefin and 82.0 - 97.7 wt% of propylene
and/or a composition (iii) of
60 - 90 wt% of a linear low density polyethylene with a density of less than 920 kg/m³ and
10 - 40 wt% of an ethylene vinylacetate copolymer comprising from 5.0 - 35.0 wt% of vinyl acetate and from 65.0 - 95.0 wt% of ethylene.

2. A film according to claim 1, **characterised in that** the linear low density polyethylene of composition (i) or (iii) is a metallocene catalysed polyethylene, preferably with a density of smaller than 900 kg/m³, more preferably with a density of smaller than 880 kg/m³, most preferably smaller than 870 kg/m³.

3. A film according to one of claims 1 or 2, **characterised in that** the intermediate layer B comprises a composition (i) of 20 - 80 wt%, more preferably 40 - 80 wt%, most preferably of 65 - 75 wt% of the linear low density polyethylene and of 20 - 80 wt%, preferably 20 - 60 wt%, most preferably 25 - 35 wt% of the propylene copolymer.

4. A film according to any one of claims 1 to 3, **characterised in that** the propylene copolymer of composition (i) comprises 0.3 - 3.0 wt%, preferably 0.8 - 2.0 wt% of ethylene, 2.0 - 15 wt%, preferably 4.0 - 12.0 wt% of the at least one C₄-C₁₂ α-olefin and 82.0 - 97.7 wt%, preferably 85.0 - 95.2 wt% of propylene.

5. A film according to claim 4, **characterised in that** the at least one C₄-C₁₂ α-olefin can be any one or mixtures of 1-butene, 1-pentene, 4-methyl-1-pentene, 1-hexene, 1-heptene or 1-octene, where 1-butene is preferred.

6. A film according to any one of claims 1 - 3, **characterised in that** the propylene copolymer of composition (i) comprises 2.0 - 8.0 wt%, preferably 4.0 -6.0 wt% of ethylene and 92.0 - 98.0 wt%, preferably 94.0 - 96 wt% of propylene.

7. A film according to any one of claims 1 - 3, **characterised in that** the propylene copolymer of composition (i) comprises 2.0 - 15.0 wt%, preferably 4.0 -10.0 wt% of 1-butene and 85.0 - 98.0 wt%, preferably 90.0 - 96 wt% of propylene.

8. A film according to one of claims 1 or 2, **characterised in that** the intermediate layer B comprises a composition (iii) of 60 - 85 wt%, preferably 60 - 80 wt% of the linear low density polyethylene and of 15 - 40 wt%, preferably 20 - 40 wt% of the ethylene vinyl acetate copolymer.

9. A film according to claim 8, **characterised in that** the ethylene vinyl acetate copolymer of composition (iii) comprises from 15 - 35 wt%, preferably 18 - 33 wt% of vinyl acetate and from 65 - 85 wt%, preferably 67 - 82 wt% of ethylene.

10. A film according to any one of claims 1 - 9, **characterised in that** layer A is comprised of a low density polyethylene preferably having a density of from 910 to 940 kg/m³, a melting point from 106 to 125 °C and an MFR (190 °C/2.16 kg) of from 0.1 to 1.0 g/10 min.

11. A film according to any one of claims 1 - 10, **characterised in that** the difference between the melting temperature of the layer A forming polyethylene and the layer C forming composition (ii) is smaller than 40 °C, preferably smaller than 35 °C, more preferably smaller than 30 °C.

12. A film according to any one of claims 1 - 11, **characterised in that** layer C comprises a composition (ii) of one or more propylene copolymers selected from the list consisting of
propylene/ethylene copolymers with 2.0 - 8.0 wt%, preferably 4.0 - 6.0 wt% of ethylene and 92.0 - 98.0 wt%, preferably 94.0 - 96 wt% of propylene,
propylene/1-butene copolymers with 2.0 - 15.0 wt%, preferably 4.0 - 10.0 wt% of 1-butene and 85.0 - 98.0 wt%, preferably 90.0 - 96 wt% of propylene and
propylene/ethylene/α-olefin copolymers with 0.3 - 3.0 wt%, preferably 0.8 - 2.0 wt% of ethylene, 2.0 - 15 wt%, preferably 4.0 - 12.0 wt% of at least one C₄-C₁₂ α-olefin and 82.0 - 97.7 wt%, preferably 85.0 - 95.2 wt% of propylene.

13. A film according to any one of claims 1 - 12, **characterised in that** layer C comprises a composition (ii) with an MFR (230 °C/2.16 kg) of from 0.5 - 10 g/10 min and a melting temperature of from 128 - 145 °C.

14. Use of films according to any one of claims 1 to 13 as thermoshrinkable films in packaging applications.

15. Use of films according to any one of claims 1 to 13 for the production of non sticking . hoods.

## Patentansprüche

1. Mehrschichtfolie, enthaltend
a) eine Schicht A aus Polyethylen,
b) eine Schicht C, die zumindest teilweise aus einer Zusammensetzung (ii) aus einem oder mehreren Propylencopolymeren besteht, und
c) eine Zwischenschicht B,
**dadurch gekennzeichnet, daß** die Zwischenschicht B zumindest teilweise aus einer Zusammensetzung (i) aus
10-90 Gew.-% eines linearen Polyethylens niederer Dichte mit einer Dichte von weniger als 920 kg/m³ und
90-10 Gew.-% eines Propylencopolymers, das 0,3-18 Gew.-% Ethylen und/oder mindestens eines C₄-C₁₂-α-Olefins und 82,0-97,7 Gew.-% Propylen enthält,
und/oder einer Zusammensetzung (iii) aus
60-90 Gew.-% eines linearen Polyethylens niederer Dichte mit einer Dichte von weniger als 920 kg/m³ und
10-40 Gew.-% eines Ethylen/Vinylacetat-Copolymers, das 5,0-35,0 Gew.-% Vinylacetat und 65,0-95,0 Gew.-% Ethylen enthält,
besteht.

2. Folie nach Anspruch 1, **dadurch gekennzeichnet, daß** es sich bei dem linearen Polyethylen niederer Dichte der Zusammensetzung (i) bzw. (iii) um ein metallocenkatalysiertes Polyethylen, vorzugsweise mit einer Dichte von weniger als 900 kg/m³, besonders bevorzugt mit einer Dichte von weniger als 880 kg/m³ und ganz besonders bevorzugt mit einer Dichte von weniger als 870 kg/m³, handelt.

3. Folie nach Anspruch 1 oder 2, **dadurch gekennzeichnet, daß** die Zwischenschicht B zumindest teilweise aus einer Zusammensetzung (i) aus 20-80 Gew.-%, besonders bevorzugt 40-80 Gew.-% und ganz besonders bevorzugt 65-75 Gew.-% des linearen Polyethylens niederer Dichte und 20-80 Gew.-%, vorzugsweise 20-60 Gew.-% und ganz besonders bevorzugt 25-35 Gew.-% des Propylencopolymers besteht.

4. Folie nach einem der Ansprüche 1 bis 3, **dadurch gekennzeichnet, daß** das Propylencopolymer der Zusammensetzung (i) 0,3-3,0 Gew.-% und vorzugsweise 0,8-2,0 Gew.-% Ethylen, 2,0-15 Gew.-% und vorzugsweise 4,0-12 Gew.-% des mindestens einen C₄-C₁₂-α-Olefins und 82,0-97,7 Gew.-% und vorzugsweise 85,0-95,2 Gew.-% Propylen enthält.

5. Folie nach Anspruch 4, **dadurch gekennzeichnet, daß** es sich bei dem mindestens einen C₄-C₁₂-α-Olefin um 1-Buten, 1-Penten, 4-Methyl-1-penten, 1-Hexen, 1-Hepten oder 1-Octen oder Gemische davon handeln kann, wobei 1-Buten bevorzugt ist.

6. Folie nach einem der Ansprüche 1 bis 3, **dadurch gekennzeichnet, daß** das Propylencopolymer der Zusammensetzung (i) 2,0-8,0 Gew.-% und vorzugsweise 4,0-6,0 Gew.-% Ethylen und 92,0-98,0 Gew.-% und vorzugsweise 94,0-96 Gew.-% Propylen enthält.

7. Folie nach einem der Ansprüche 1 bis 3, **dadurch gekennzeichnet, daß** das Propylencopolymer der Zusammensetzung (i) 2,0-15,0 Gew.-% und vorzugsweise 4,0-10,0 Gew.-% 1-Buten und 85,0-98,0 Gew.-% und vorzugsweise 90,0-96 Gew.-% Propylen enthält.

8. Folie nach Anspruch 1 oder 2, **dadurch gekennzeichnet, daß** die Zwischenschicht B zumindest teilweise aus einer Zusammensetzung (iii) aus 60-85 Gew.-% und vorzugsweise 60-80 Gew.-% des linearen Polyethylens niederer Dichte und 15-40 Gew.-% und vorzugsweise 20-40 Gew.-% des Ethylen/Vinylacetat-Copolymers besteht.

9. Folie nach Anspruch 8, **dadurch gekennzeichnet, daß** das Ethylen/Vinylacetat-Copolymer der Zusammensetzung (iii) 15-35 Gew.-% und vorzugsweise 18-33 Gew.-% Vinylacetat und 65-85 Gew.-% und vorzugsweise 67-82 Gew.-% Ethylen enthält.

10. Folie nach einem der Ansprüche 1-9, **dadurch gekennzeichnet, daß** Schicht A aus einem Polyethylen niederer Dichte, vorzugsweise mit einer Dichte von 910 bis 940 kg/m³, einem Schmelzpunkt von 106 bis 125°C und einer MFR (190°C/2,16 kg) von 0,1 bis 1,0 g/10 min, besteht.

11. Folie nach einem der Ansprüche 1-10, **dadurch gekennzeichnet, daß** der Unterschied zwischen der Schmelztemperatur des die Schicht A bildenden Polyethylens und der die Schicht C bildenden Zusammensetzung (ii) kleiner als 40°C, vorzugsweise kleiner als 35°C und besonders bevorzugt kleiner als 30°C ist.

12. Folie nach einem der Ansprüche 1-11, **dadurch gekennzeichnet, daß** Schicht C zumindest teilweise aus einer Zusammensetzung (ii) aus einem oder mehreren Propylencopolymeren aus der Liste bestehend aus
Propylen/Ethylen-Copolymeren mit 2,0-8,0 Gew.-% und vorzugsweise 4,0-6,0 Gew.-% Ethylen und 92,0-98,0 Gew.-% und vorzugsweise 94,0-96 Gew.-% Propylen,
Propylen/1-Buten-Copolymeren mit 2,0-15,0 Gew.-% und vorzugsweise 4,0-10,0 Gew.-% 1-Buten und 85,0-98,0 Gew.-% und vorzugsweise 90,0-96 Gew.-% Propylen und
Propylen/Ethylen/α-Olefin-Copolymeren mit 0,3-3,0 Gew.-% und vorzugsweise 0,8-2,0 Gew.-% Ethylen, 2,0-15 Gew.-% und vorzugsweise 4,0-12,0 Gew.-% mindestens eines C₄-C₁₂-α-Olefins und 82,0-97,7 Gew.-% und vorzugsweise 85,0-95,2 Gew.-% Propylen besteht.

13. Folie nach einem der Ansprüche 1-12, **dadurch gekennzeichnet, daß** Schicht C zumindest teilweise aus einer Zusammensetzung (ii) mit einer MFR (230°C/2,16 kg) von 0,5-10 g/10 min und einer Schmelztemperatur von 128-145°C besteht.

14. Verwendung von Folien nach einem der Ansprüche 1 bis 13 als wärmeschrumpfbare Folien bei Verpackungsanwendungen.

15. Verwendung von Folien nach einem der Ansprüche 1 bis 13 zur Herstellung von nichthaftenden Hauben.

## Revendications

1. Film multicouche comprenant
a) une couche A qui est constituée de polyéthylène,
b) une couche C comprenant une composition (ii) d'un ou de plusieurs copolymères de propylène,
c) une couche intermédiaire B,
**caractérisé en ce que** la couche intermédiaire B comprend une composition (i)
de 10 - 90% en poids d'un polyéthylène linéaire de faible densité ayant une densité de moins de 920 kg/m³ et
de 90 - 10% en poids d'un copolymère de propylène comprenant 0,3 - 18% en poids d'éthylène et/ou au moins d'une α-oléfine en C₄-C₁₂ et 82,0 - 97,7% en poids de propylène
et/ou une composition (iii)
de 60 - 90% en poids d'un polyéthylène linéaire de faible densité ayant une densité de moins de 920 kg/m³ et
de 10 - 40% en poids d'un copolymère éthylène acétate de vinyle, comprenant 5,0 - 35,0% en poids d'acétate de vinyle et 65,0 - 95,0% en poids d'éthylène.

2. Film selon la revendication 1, **caractérisé en ce que** le polyéthylène linéaire de faible densité de composition (i) ou (iii) est un polyéthylène catalysé par un métallocène, de préférence ayant une densité inférieure à 900 kg/m³, plus préférablement ayant une densité inférieure à 880 kg/m³, le plus préférablement inférieure à 870 kg/m³.

3. Film selon la revendication 1 ou 2, **caractérisé en ce que** la couche intermédiaire B comprend une composition (i) de 20 - 80% en poids, plus préférablement de 40 - 80% en poids, le plus préférablement de 65 - 75% en poids du polyéthylène linéaire de faible densité et de 20 - 80% en poids, de préférence de 20 - 60% en poids, le plus préférablement de 25 - 35% en poids du copolymère de propylène.

4. Film selon l'une quelconque des revendications 1 à 3, **caractérisé en ce que** le copolymère de propylène de composition (i) comprend 0,3 - 3,0% en poids, de préférence 0,8 - 2,0% en poids d'éthylène, 2,0 - 15% en poids, de préférence 4,0 - 12,0% en poids de la au moins une α-oléfine en C₄-C₁₂ et 82,0 - 97,7% en poids, de préférence 85,0 - 95,2% en poids de propylène.

5. Film selon la revendication 4, **caractérisé en ce que** la au moins une α-oléfine en C₄-C₁₂ peut être l'un quelconque des composants ou un mélange des composants 1-butène, 1-pentène, 4-méthyl-1-pentène, 1-hexène, 1-heptène ou 1-octène, où le 1-butène est préféré.

6. Film selon l'une quelconque des revendications 1 à 3, **caractérisé en ce que** le copolymère de propylène de composition (i) comprend 2,0 - 8,0% en poids, de préférence 4,0 - 6,0% en poids d'éthylène et 92,0 - 98,0% en poids, de préférence 94,0 - 96,0% en poids de propylène.

7. Film selon l'une quelconque des revendications 1 à 3, **caractérisé en ce que** le copolymère de propylène de composition (i) comprend 2,0 - 15,0% en poids, de préférence 4,0 - 10,0% en poids de 1-butène et 85,0 - 98,0% en poids, de préférence 90,0 - 96,0% en poids de propylène.

8. Film selon la revendication 1 ou 2, **caractérisé en ce que** la couche intermédiaire B comprend une composition (iii) de 60 - 85% en poids, de préférence de 60 - 80% en poids, du polyéthylène linéaire de faible densité et de 15 - 40% en poids, de préférence de 20 - 40% en poids du copolymère éthylène acétate de vinyle.

9. Film selon la revendication 8, **caractérisé en ce que** le copolymère éthylène acétate de vinyle de composition (iii) comprend 15 - 35% en poids, de préférence 18 - 33% en poids d'acétate de vinyle et 65 - 85% en poids, de préférence 67 - 82% en poids d'éthylène.

10. Film selon l'une quelconque des revendications 1 - 9, **caractérisé en ce que** la couche A est constituée d'un polyéthylène de faible densité, ayant de préférence une densité allant de 910 à 940 kg/m³, un point de fusion allant de 106 à 125°C et un indice MFR (190°C/2,16 kg) allant de 0,1 à 1,0 g/10 minutes.

11. Film selon l'une quelconque des revendications 1 - 10, **caractérisé en ce que** la différence entre la température de fusion de la couche A formant le polyéthylène et la couche C formant la composition (ii) est inférieure à 40 °C, de préférence, inférieure à 35 °C, plus préférablement inférieure à 30 °C.

12. Film selon l'une quelconque des revendications 1 - 11, **caractérisé en ce que** la couche C comprend une composition (ii) d'un ou de plusieurs copolymères de propylène sélectionnés parmi la liste constituée de copolymères propylène/éthylène avec 2,0 - 8,0% en poids, de préférence 4,0 - 6,0% en poids d'éthylène et 92,0 - 98,0% en poids, de préférence 94,0 - 96% en poids de propylène,
de copolymères propylène/1-butène avec 2,0 - 15,0% en poids, de préférence 4,0 - 10,0% en poids de 1-butène et 85,0 - 98,0% en poids, de préférence 90,0 - 96% en poids de propylène et de copolymères propylène/éthylène/α-oléfine ayant 0,3 - 3,0% en poids, de préférence 0,8 - 2,0% en poids d'éthylène, 2,0 - 15% en poids, de préférence 4,0 - 12,0% en poids d'au moins une α-oléfine en C₄-C₁₂ et de 82, 0 - 97,7% en poids, de préférence 85,0 - 95,2% en poids de propylène.

13. Film selon l'une quelconque des revendications 1 - 12, **caractérisé en ce que** la couche C comprend une composition (ii) ayant un indice MFR (230°C/2,16 kg) de 0,5 - 10 g/10 minutes et une température de fusion allant de 128 à 145 °C.

14. Utilisation de films selon l'une quelconque des revendications 1 à 13 en tant que films thermorétractables dans des applications d'emballage.

15. Utilisation de films selon l'une quelconque des revendications 1 à 13 en vue de la production de cloches non adhésives.
